# EUROPÄISCHE PATENTSCHRIFT

(11) **EP 0 584 604 B1**
(45) Veröffentlichungstag und Bekanntmachung des Hinweises auf die Patenterteilung: **19.06.1996**
(21) Anmeldenummer: 93112556.1
(22) Anmeldetag: 05.08.1993
(51) Int. Cl.: C08K 13/04, C08J 11/06, C08L 95/00

(54) **Füller für ein bituminöses Mischgut**
Filler for bituminous composition
Charge pour mélange bitumineux

(30) Priorität: 17.08.1992 DE 4227153
(43) Veröffentlichungstag der Anmeldung: 02.03.1994
(73) Patentinhaber: ReDeLa HERSTELLUNG UND VERTRIEB VON BAUSTOFFEN GmbH, 99444 Blankenhain-Grosspillingsdorf (DE)
(72) Erfinder: Goldbach, Erhard, D-44651 Herne (DE)
(74) Vertreter: Bockermann, Rolf, Dipl.-Ing.

(56) Entgegenhaltungen:
- DD-A- 140 348
- US-A- 4 706 893

## Beschreibung

Die Erfindung richtet sich auf einen Füller für ein bituminöses Mischgut, insbesondere Splittmastixasphalt.

Bituminöses Mischgut als Straßenbelag, insbesondere in Form von Splittmastixasphalt, setzt sich in der Regel aus Splitt in unterschiedlichen Korngrößen von etwa 2 mm bis 16 mm, Sanden mit unterschiedlichen Korngrößen zwischen etwa 0,09 mm und 2 mm sowie einem das Mischgut versteifenden Füller aus Gesteinsmehl zusammen, wobei sich die Gewichtsprozente von Splitt zu Sand zu Füller etwa wie 75:16:9 verhalten.

Bei den bislang verwendeten Füllern sind in der überwiegenden Mehrzahl solche verwendet worden, die ihre Basis in den natürlichen Vorkommen wie Kiesgruben, Steinbrüchen usw. haben. Da jedoch in neuerer Zeit ein Umdenkungsprozeß dahingehend stattfindet, daß die Gesamtheit der natürlichen Rohstoffe nicht in unbegrenzten Mengen zur Verfügung steht und folglich mit diesen Rohstoffen sparsam umgegangen werden muß, sind Überlegungen angestellt worden, inwieweit industrielle Neben- oder Abfallprodukte natürliche Rohstoffe in den vorerwähnten Füllern ersetzen können.

Solche industriellen Nebenprodukte sind z.B. Nebengestein der Steinkohle, Eisenhüttenschlacken, Kraftwerksrückstände, Bauschutt, Straßenaufbruch oder Müllverbrennungsasche. Sie werden in der Regel nicht wieder- oder weiterverwendet und landen zumeist als Sondermüll auf Deponien. Hier liegt dann auch das besondere Problem solcher Nebenprodukte. Es ist meist nicht bekannt, wie sie sich zusammensetzen, so daß ihre Eignung als Füller für bituminöses Mischgut im Hinblick auf ihre Umweltverträglichkeit zweifelhaft erscheint.

Hiervon ausgehend liegt der Erfindung die Aufgabe zugrunde, einen Füller für ein bituminöses Mischgut bereitzustellen, in welchem industrielle Nebenprodukte zu einem hohen Prozentsatz natürliche Rohstoffe in Form von Gesteinsmehlen substituieren können, ohne daß die Umwelt negativ belastet wird.

Die in diesem Zusammenhang vorgeschlagene erfindungsgemäße Lösung sieht vor, das Naturprodukt Gesteinsmehl mit einem speziellen pulverisierten industriellen Nebenprodukt, das aus Harz und zellulosen Faserstoffen besteht, zu mischen. Ein solches Nebenprodukt fällt in vielen Industriezweigen an, und zwar insbesondere dort, wo Erzeugnisse von Hand oder maschinell bearbeitet werden, die zellulose Faserstoffe in einer Harzeinbettung aufweisen. Bei den hierbei durchgeführten Versuchen hat sich herausgestellt, daß die Gesteinsmehle zu einem hohen Anteil durch pulverisierte Nebenprodukte bestimmter Stoffzusammensetzung substituiert werden können, wobei sich eine deutliche Versteifung des Mischguts zeigt. Dieser Sachverhalt ist darauf zurückzuführen, daß auch in den durch die z.B. bohrende oder fräsende Bearbeitung anfallenden pulverförmigen Nebenprodukten die besonders in hakeliger Form vorliegenden Faserstoffe mindestens zum Teil freigesetzt sind und somit eine stabilisierende Wirkung beim Einsatz in Asphaltmischungen bewirken. Es ist keinerlei Neigung zum Entmischen festzustellen. Bei einem hohen Verdichtungswiderstand liegt ein äußerst standfester Splittmastixasphalt vor mit dem Ergebnis, daß insbesondere das bei stark belasteten Straßen bekannte Spurrillenproblem weitgehend eliminiert werden kann.

Das Mischungsverhältnis des Gesteinsmehls einerseits zum pulverisierten industriellen Nebenprodukt andererseits kann sich in unterschiedlichen Größenordnungen bewegen. Welches Mischungsverhältnis im Einzelfall zum Tragen kommt, hängt davon ab, welches Gesteinsmehl zur Anwendung gelangt und aus welchen Stoffen sich das industrielle Nebenprodukt zusammensetzt.

Die Erfindung hat insbesondere erkannt, daß als pulverisiertes Harz mit zellulosen Faserstoffen Bohr-, Schleif- oder Fräsmehle benutzt werden können, die in größeren Mengen bei der Bearbeitung von Kupplungs- und/oder Bremsbelägen in den verschiedenen Industriezweigen, wie z.B. in der Kupplungs- oder Automobilindustrie, anfallen. Bislang mußte dieser mehlartige Abrieb als Sondermüll auf entsprechenden Deponien gelagert werden. Hiermit ist naturgemäß ein hoher transporttechnischer, lagerungstechnischer und finanzieller Aufwand verbunden mit der Gefahr einer enormen Umweltbelastung.

Im Rahmen der Erfindung können jetzt diese mehlartigen Abriebe nahezu vollständig weiterverwendet werden. Sie fallen folglich nicht mehr als Sondermüll an und verursachen demnach auch nicht mehr die mit Sondermüll einhergehenden Probleme.

Siehe in diesem Zusammenhang zum Stand der Technik auch die Zeitschrift "Baustoff Recycling + Deponietechnik" 5/88, Seiten 12 bis 15 sowie die Sonderausgabe dieser Zeitschrift zur ENTSORGA '88, Seiten 18 bis 26.

Ferner weist der erfindungsgemäßen Füller ein Mischungsanteil in der Größe von etwa 80 Gew. % eine Korngröße von < 0,09 mm auf. Der restliche Anteil der Mischung in Höhe von etwa 20 Gew. % kann in einer Korngröße bis zu etwa 2 mm vorliegen.

Die Umweltverträglichkeit des erfindungsgemäßen Füllers ergibt sich aus dem in der Tabelle gemäß Seite 9 angegebenen Beispiel. Hierbei erfolgte die Überprüfung auf Umweltverträglichkeit auf die in einem sogenannten 54-versuch auslaugbaren wasserlöslichen Stoffe sowie auf die in einem modifizierten Auslaugversuch auslaugbaren Mengen an Phenolen aus einem Marshall-Probekörper, der mit dem erfindungsgemäßen Füller erstellt worden war. Zur Interpretation sind die Toleranzwerte der Trinkwasserverordnung heranzuziehen.

Die Analysenverfahren waren wie folgt:
- Zu A:: Aussehen und Geruch augenscheinlich; ph-Wert; Eh-Wert mit Potentiographen Metrohm; Leitfähigkeit mit Meßelektrode WTW (Bezugstemp. 20 °C).
- Zu B1:: Abdampfrückstand durch Eindampfen bei 105 °C.
- Zu B2:: Oxidierbarkeit = Gehalt an oxid. anorg./org. Stoffen, KMnO₄-Verbrauch nach KUBEL, pot. Titr. Mn⁷⁺ → Mn²⁺ der heißen schwefelsauren Probenlösung mit KMnO₄-Lösung nach Vorgabe von jeweils 15 ml KMnO₄- und Oxalsäurelösung. In () gesetzter Wert nach längerem Sieden der schwefels. Probenlösung zur Ausschaltung oxid. anorg. Stoffe (H₂S, NO₂) sowie korrigiert um 0,57 mg/l je mg Fe⁺⁺. Chemischer Sauerstoffbedarf CSB gem. DIN 38 409 - H 43-1, Cr⁶⁺ → Cr³⁺; pot. Rücktitration nicht verbrauchten Kaliumdichromats mit Ammoniumeisensulfat in schwefels. Lösung unter Quecksilbermaskierung der Chloride. Biochemischer Sauerstoffbedarf BSB₅. Messung des Sauerstoffgehalts amperometrisch mit WTW Oxi-Elektrode nach Zehrungsdauer 5 Tage gem. Verdünnungsmethode DEV H 5.
- Zu B3:: Sauerstoffgehalt als O₂ amperometrisch mit WTW Oxi-Elektrode.
- Zu B4:: Gesamtphosphor als PO₄ nach DEV D 11, photom. Best. des Gesamtphosphors nach Aufschluß mittels Schwefelsäure-Perchlorsäure.
- Zu B5:: Freie gelöste aggressive Kohlensäure als CO₂ sowie die Karbonathärte KH und Nichtkarbonathärte NKH werden berechnet aus den Meßwerten: pH, Säure- und Basekapazität sowie Gesamthörte GH (1°DH = 10 mg/l CaO); hierzu Säure- und Basekapazität durch pot. Titration bis pH = 4,3 (m-Wert) sowie bis pH = 8,2 (p-Wert) mit 0,1 H NaOH oder HCl. Gesamthärte GH durch pot. Titr. mit Titriplexlösung mit Farbindikator MERCK.
- Zu B6:: Organische Verbindungen. Pestizide u.ä. (Insektizide, Herbizide / poly-chlorierte/bromierte Biphenyle u. Terphenyle) mittels Gaschromatographie polycyclische aromatische Kohlenwasserstoffe PAK (engl. PAH). Dünnschicht-Chromatographie; Tenside photometrisch als Methylenblau- bzw. Bismutaktive Substanz mittels HPLC nach TVO-Liste; organische Chlorverbindungen mittels Gaschromatographie; Phenolindex als Phenol nach DIN 38 409 H 16, photometr. Best. im Chloroform-Extrakt.
- Zu B7:: Chlorid- und Sulfidbestimmung pot. Titration mit 0,002 N AgNO₃ in acetonhaltiger, ENO₃-saurer Probelösung. Fluorid-Bestimmung, Metrohm-Potentiograph mit ionenspez. Fluoridelektrode in Tisab IV-Lösung. Sulfat-Bestimmung, lösl. Sulfat gravim. als Barium-Sulfat.
- Zu B8:: Stickstoffverbindungen sowie Metalle mittels inverser Voltametrie/Polarographie mit internem (bei NH₄⁺ auch externem) Standard mit Metrohm-Polarograph; freie Cyanide und kompl. geb. Cyanide zuvor aufgeschlossen gem. DEV D 13. Metrohm-Application Bulletin Nr. 127 d für NH₄⁺, Nr. 70 d für NO₃, NO₂, Nr. 110 d für CN¹, Nr. 104, 108, 124 für Metalle, Nr. 122 d für As³⁺ und Gesamtarsen.
- Zu C1:: Fischtest gem. DEV L 20; angegeben wird der Verdünnungsansatz (G = 8 bedeutet 1/8 Eluat + 7/8 Aquariumwasser), bei dem alle 5 eingesetzten Goldorfen über 48 h überlebten.
- Zu C2:: Zelltest nach AHNE, angegeben wird die erste nicht letale Verdünnungsrate beim Test mit Forellenleberzellen; Zbl. Bakt. Hyg., I. Abt. Orig. B 180, 480 - 504 (1985).

Das überprüfte S4-Eluat des Füllers ist farblos und klar sowie von muffigem Geruch. Der deutlich fäkalische Geruch aus den bei der Herstellung z.B. von Bremsbelägen noch nicht abgehärteten Harzkomponenten, der am pulverförmigen Füller noch feststellbar ist, findet sich in der wäßrigen Auslaugung nicht mehr. Die Kennwerte für pH-Wert und elektrische Leitfähigkeit zeigen keine Auffälligkeiten, womit auch bezüglich wasserlöslicher Salze ebenfalls nur niedrige Werte vorhanden sind, wie dies bei den exemplarisch überprüften Fluorid, Sulfat und Nitrat bestätigt wird. Danach können keine bemerkenswerten Metallspuren im Rahmen der Prüfung auf wasserlösliche Schwermetallspuren festgestellt werden. Lediglich Kupfer ist leicht erhöht. Dies dürfte vermutlich eine Ursache aus der Verwendung von Kupfermaterialien bei der Herstellung der Bremsbeläge sein.

Desweiteren ist festzustellen, daß auch die Cyanide in den wasserlöslichen Spuren deutlich unter der Nachweisbarkeitsgrenze liegen. Ferner beweist die Tabelle, daß die Prüfung auf Anwesenheit von karzerogenen polycyclischen aromatischen Kohlenwasserstoffen negativ verlief.

Im Hinblick auf das evtl. Vorhandensein von Phenolen ist festzustellen, daß die Überprüfung in einem Marshall-Probekörper, also in dem relevanten Bezugskörper in der Asphalttechnologie, der für eine 100 %ige Verdichtung des Asphalts steht, vorgenommen wurde. Das heißt, es wurde der Asphalt in verdichtetem Zustand untersucht, wie er auch in der Praxis vorliegt. Eine solche Verfahrensweise ist bei den einschlägigen Prüfinstitutionen üblich, um darzustellen, ob wasserlösliche schädliche Inhaltsstoffe in einem verfestigten oder in einem eingebundenen Zustand wasserunschädlich sind. Danach gibt der erfindungsgemäße Füller im eingebundenen Zustand in der bituminösen Mischung kein Phenol ab. Es wurde ein Phenolindex von nicht nachweisbar gefunden, das heißt unter 5 µg/l liegend.

Damit liegt auch aus umweltverträglicher Sicht kein Vorbehalt gegen den erfindungsgemäßen Füller vor, da der Füller nicht so eingesetzt wird, wie er als Pulver produziert wird, sondern er wird zum Versteifen von Asphalt in einer bituminösen Umhüllung eingesetzt.

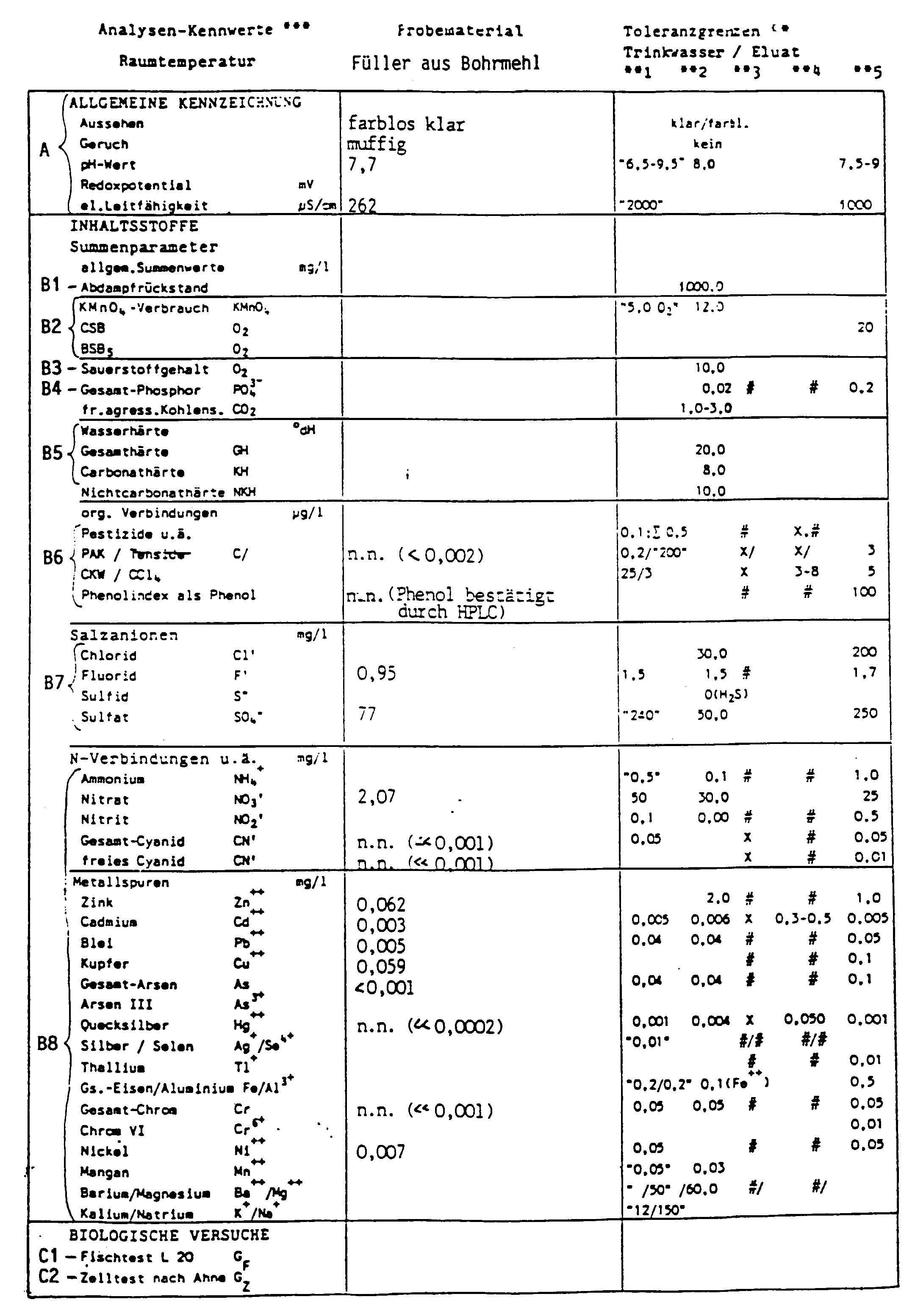

## Patentansprüche

1. Füller für ein bituminöses Mischgut, insbesondere Splittmastixasphalt, welcher aus einer Mischung aus einem Gesteinsmehl einerseits und pulverisiertem Harz mit zellulosen Faserstoffen andererseits gebildet ist, wobei das pulverisierte Harz mit zellulosen Faserstoffen aus bei der Bearbeitung von Kupplungs- und/oder Bremsbelägen anfallendem mehlartigen Abrieb besteht und ein Mischungsanteil des Füllers in der Größe von etwa 80 Gew. % eine Korngröße von < 0,09 mm aufweist.

## Claims

1. A filler for a bituminous mixed material, more particularly chippings mastic asphalt, comprising a mixture of stone dust on the one hand and pulverised resin with cellulose fibre materials on the other hand, the pulverised resin with cellulose fibre materials consisting of flour-like material resulting from abrasion during the machining of clutch linings and/or brake linings and a component of the filler equal to about 80 % by weight having a particle size of < 0.09 mm.

## Revendications

1. Matières de charge ou fines pour matériaux enrobés bitumineux, en particulier asphalte mastic ou asphalte coulé avec gravillons qui sont constituées par un mélange de roche pulvérisée d'une part et de résine pulvérisée avec des matières fibreuses cellulosiques d'autre part, la résine pulvérisée avec les matières fibreuses cellulosiques étant constituée par les matières de friction pulvérulentes produites lors de l'usinage de garnitures d'embrayage et/ou de freins et une portion de mélange des matières de charge ou fines présente, dans une proportion d'environ 80 % en poids, une granulométrie de < 0,09 mm.
